# FASCICULE DE BREVET EUROPEEN

(11) **EP 1 700 233 B1**
(45) Date de publication et mention de la délivrance du brevet: **20.05.2009**
(21) Numéro de dépôt: 04787404.5
(22) Date de dépôt: 21.09.2004
(51) Int. Cl.: G06F 17/30

(54) **PROCEDE D'ORGANISATION D'UNE BASE DE DONNEES**
VERFAHREN ZUM ORGANISIEREN EINER DATENBANK
METHOD FOR ORGANIZING A DATABASE

(30) Priorité: 22.09.2003 FR 0310474
(43) Date de publication de la demande: 13.09.2006
(73) Titulaire: KoDe, 75013 Paris (FR)
(72) Inventeur: KOSKAS, Joseph Michel, F-75013 Paris (FR)
(86) Numéro de dépôt international: PCT/FR2004/002371
(87) Numéro de publication internationale: WO 2005/031602

(56) Documents cités:
- EP-A- 1 217 540
- US-B1- 6 266 662
- D.E. KNUTH: "The Art of Computer Programming, Volume 3" 1973, ADDISON-WESLEY , READING, MASSACHUSETTS, USA , XP002321286 page 11 - page 33

## Description

La présente invention se rapporte au domaine des bases de données. La présente invention porte plus particulièrement sur un procédé technique d'organisation et de traitement de requêtes d'une base de données.

On connaît dans l'art antérieur, par la demande de brevet américain US 2004/0098363 (IBM), un système de stockage hiérarchique de données. Des objets de données sont stockés dans une hiérarchie de stockage et des tables de contenu contenant des entrées sont générées. L'emplacement des tables de contenu est géré de façon dynamique.

L'art antérieur connaît également, par la demande de brevet européen EP 1 423 799 (Lafayette Software) des procédés pour organiser des données et réaliser des requêtes dans un système de bases de données. Les informations sont organisées dans un système de bases de données avec des groupes d'attributs définis et des mots de collection de données assignés aux attributs en associant une liste d'identifiants de graphes de données avec une entrée de thésaurus.
L'art antérieur connaît, par la demande US 2003/130981 A1 (Nehru Archana [US] et AL) un procédé de construction de radix trees économisant l'espace de stockage.
L'art antérieur connaît également, par la demande US-A-5 826 262 (Bui Thuang Quang [US] et AL) un procédé de construction de radix trees parallélisé.

L'art antérieur connaît également par la demande de brevet PCT WO 04/25507 (Karmic Software Research), qui correspond à la demande de brevet français FR 2 844 372, un procédé d'organisation d'une base de données numériques sous une forme traçable. Plus précisément, cette demande porte sur un procédé d'organisation d'une base de données numériques sous une forme traçable, comportant des étapes de modification d'une base de données numériques principale par ajout ou suppression ou modification d'un enregistrement de la base principale et des étapes de lecture de la base de données principale, caractérisé en ce que
l'étape de modification de la base de données principale comprend une opération de création d'au moins un enregistrement numérique comportant au moins :
les identifiants numériques uniques des enregistrements et des attributs concernés de la base de données principale,
un identifiant numérique unique de l'état de la base de données principale correspondant à ladite modification de la base de données principale,
les valeurs élémentaires des attributs qui leur sont affectées à travers les opérations élémentaires, sans procéder au stockage des attributs ou des enregistrements non modifiés,
et d'ajout dudit enregistrement dans une base d'historisation interne composée d'au moins une table,
et en ce que l'étape de lecture portant sur tout état final ou antérieur de la base de données principale consiste à recevoir (ou intercepter) une requête originelle associée à l'identificateur unique de l'état visé, à procéder à une transformation de ladite requête originelle pour construire une requête modifiée d'adressage de la base d'historisation comprenant les critères de la requête originelle et l'identificateur de l'état visé, et de reconstruction du ou des enregistrements correspondant aux critères de la requête originelle et à l'état visé, ladite étape de reconstitution consistant à retrouver les valeurs élémentaires, contenues dans les enregistrements de la base d'historisation, correspondant aux critères de la requête originelle [afin de réduire les besoins de capacité de stockage et les temps de traitement].

On connaît également, par le brevet américain US 6 292 795 (IBM), un système d'indexation de fichiers et un mécanisme pour accéder à des données dans un tel système.

Enfin, on connaît aussi dans l'art antérieur le brevet américain US 5 826 262 (IBM) un procédé de construction en parallèle d'arbres à radicaux.

Le problème technique que la présente invention se propose de résoudre est celui qui consiste en l'amélioration des performances des résolutions de requêtes dans une base de données. En effet, les procédés de l'art antérieur consomment de grandes ressources machine, que ce soit du point de vue des ressources processeurs que des ressources disques.

A cet effet, la présente invention concerne, dans son acception la plus générale, un procédé d'organisation d'une base de données relationnelle destiné à être mis en oeuvre sur une architecture informatique comprenant au moins un processeur et de la mémoire, caractérisé en ce qu'il comporte les étapes consistant à :
- élaborer une table d'expansion hiérarchique ;
- créer un thésaurus de chacune des colonnes ;
- pour chacun des mots de chacun des thésaurus, créer l'arbre des radicaux de l'ensemble des indices de lignes sur lesquelles ledit mot apparaît ;
- pour chacune des clés primaires, stocker la suite de ces valeurs en mettant en oeuvre une permutation sur l'ensemble de ces valeurs dans le but de retrouver une donnée.
   Avantageusement, le procédé comporte en outre une étape de découpage des tables de la base de données en un ensemble de sous-tables, chacune comportant un nombre donné de lignes à l'exception de la dernière sous-table.
   De préférence, la base de données met en oeuvre le langage SQL (Structured Query Language).
   La présente invention se rapporte également à un système de base de données organisé selon le procédé d'organisation défini plus haut.
   La présente invention se rapporte également à un procédé de requêtage d'une base de données organisée selon le procédé d'organisation défini plus haut, caractérisé en ce qu'il comporte
- une première étape de calcul d'une table d'expansion ;
- une deuxième étape de résolution de la clause « Where » de la requête en interrogeant les colonnes de ladite table d'expansion ;
- une troisième étape d'interrogation des images non inversées des colonnes pour résoudre la clause « Sélect ».

On comprendra mieux l'invention à l'aide de la description, faite ci-après à titre purement explicatif, d'un mode de réalisation de l'invention, en référence aux figures annexées :
- la figure 1 illustre un stockage au moyen d'un arbre à radicaux ;
- la figure 2 illustre un exemple de représentation d'une colonne d'une table ;
- la figure 3 illustre un résumé du stockage complet d'une colonne ;

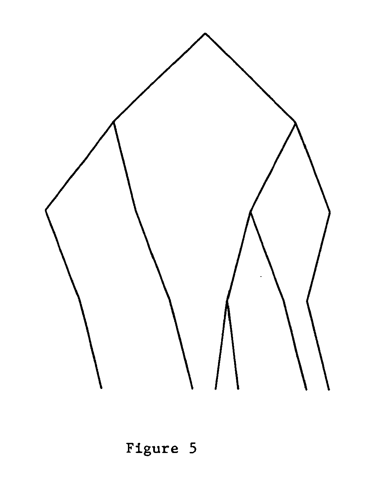

- les figures 4 et 5 illustrent un arbre à radicaux avant et après une opération NOT.

Un arbre à radicaux est un moyen pratique de stocker des ensembles d'entiers, particulièrement quand ils sont écrits sur une même longueur. Lorsqu'on utilise des entiers, il est clairement toujours possible de leur imposer la même longueur d'écriture (celle du plus long ou plus) en faisant précéder leur écriture du nombre adéquat de chiffres 0.

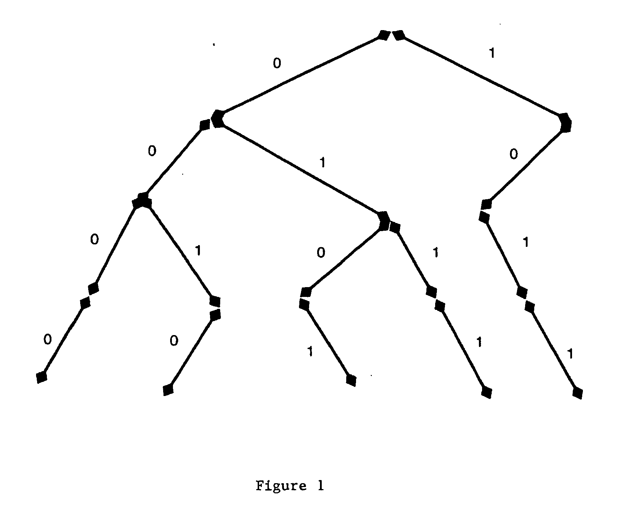

Considérons par exemple un ensemble d'entiers qu'on écrit sur une longueur unique en base 2, S = {0, 2, 5, 7, 11} = {0000, 0010, 0101, 0111, 1011}. On peut alors stocker cet ensemble dans un arbre à radicaux dont chaque chemin, depuis la racine jusqu'aux feuilles, représente l'écriture de l'entier stocké dans la feuille de l'arbre. Par exemple, l'ensemble précédent peut être stocké dans l'arbre à radicaux de la Figure 1.
Les avantages à utiliser un arbre à radicaux sont fort nombreux : le stockage est économique en termes d'espace mémoire car les préfixes communs aux nombres distincts ne sont stockés qu'une seule fois. Par ailleurs, comme nous le verrons dans les paragraphes suivants, les opérations logiques sur des ensembles stockés ainsi sont rapides, économiques en termes de ressources machines et simples à implémenter.

On détaille comment des arbres à radicaux peuvent être utiles et efficaces pour stocker les données d'une base de données ou pour la modifier.

Dans la première partie, on examine le cas où la base de données n'est composée que d'une table, elle-même composée d'une unique colonne.

Puis nous examinons le cas où la base de données n'est composée que d'une unique table, elle-même composée de plusieurs colonnes, et d'au moins une clé primaire. Il peut en effet s'avérer très pratique d'autoriser une table à être munie de plusieurs clés primaires. En effet, en pratique, il arrive fréquemment qu'une ligne de table ne soit que partiellement remplie. Il se peut alors qu'une des clés primaires soit incomplète, donc inutilisable, mais qu'une autre soit complète.

Enfin, la dernière partie est dédiée à la création des indexes d'une base de données quelconque.

Une clé primaire est une colonne, ou un ensemble ordonné de colonnes, tel que deux lignes différentes de la table ne puissent prendre les mêmes valeurs sur cette (ou ces) colonnes.

Il existe cependant toujours une clé primaire implicite et très utile : l'indice de la ligne dans la table (il s'agit en effet d'une clé primaire puisque deux lignes distinctes ne peuvent avoir le même indice de ligne). Dans la suite de la description de cette invention, nous supposerons que cette clé primaire est effective.

Si on doit stocker, interroger et gérer une base de données faite d'une unique table elle-même constituée d'une unique table, on peut calculer le thesaurus de cette colonne et pour chaque mot de ce thesaurus calculer l'ensemble des indices de lignes auxquels il apparaît.

Ces indices de lignes peuvent tout naturellement être stockés dans un arbre à radicaux.

Remarquons qu'au cours de la création du thesaurus, un tri des données est effectué. On trie en effet l'ensemble des couples (mot, indice de ligne) selon les mots et, à mot égal, selon les indices de lignes. Ainsi on peut d'une part, calculer le thesaurus et d'autre part, pour chacun des mots de ce thesaurus construire l'arbre à radicaux des indices de lignes auxquels il apparaît.

**Prenons un exemple : la table :**

| | |
|---|---|
| 0 | Male |
| 1 | Female |
| 2 | Female |
| 3 | Male |
| 4 | Female |
| 5 | Male |
| 6 | Male |
| 7 | Female |
| 8 | Female |
| 9 | Male |
| 10 | Male |

(dans cet exemple, les indices de lignes sont indiqués explicitement).

On construit alors les couples
(Male, 0), (Female, 1), (Female, 2), (Male, 3), (Female, 4), (Male, 5), (Male, 6), (Female, 7), (Female, 8), (Male, 9), (Male, 10)
et on les trie selon leur premier élément en priorité :
(Female, 1), (Female, 2), (Female, 4), (Female, 7), (Female, 8),
(Male, 0), (Male, 3), (Male, 5), (Male, 6), (Male, 9), (Male, 10).

On peut alors construire le thesaurus et, pour chaque mot du thesaurus, l'ensemble des indices de lignes auxquels il apparaît.

Le mot " Female " apparaît aux lignes {1, 2, 4, 7, 8} et " Male " apparaît aux indices {0, 3, 5, 6, 9, 10}.

Après ce travail, il est très simple de répondre à une requête du type quels sont les indices de lignes auxquels apparaît le mot " Male " ? "

Ces ensembles d'indices de lignes sont stockés dans des arbres à radicaux. Ce procédé de stockage est très utile pour calculer l'intersection, la réunion etc. de tels ensembles.

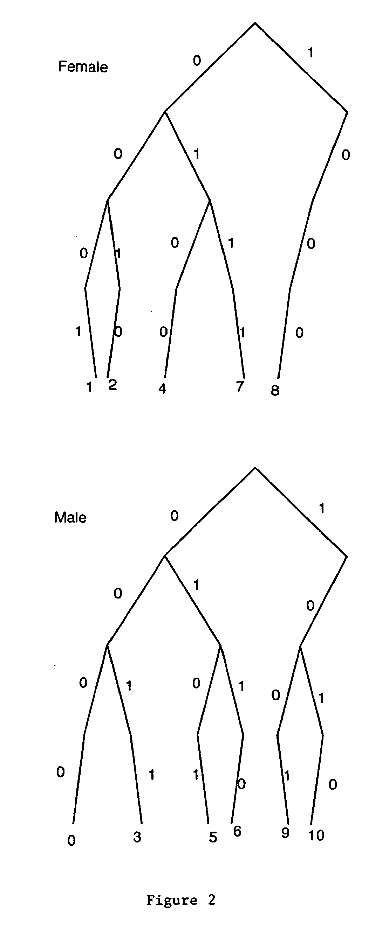

Dans l'exemple précédent, on obtient le résultat présenté Figure 2.

Il est une autre requête courante qui concerne le contenu d'une colonne : le " entre " (between) : on peut souhaiter connaître les indices de lignes dont le contenu est compris entre deux bornes données.

Imaginons par exemple qu'une colonne contienne des dates, écrites au format AAAAMMJJ. Comparer deux dates stockées sous ce format est en fait la même chose que les comparer lexicographiquement.

Mais nous pouvons aussi enrichir le thesaurus de mots obtenus comme troncatures des mots du thesaurus initial. Par exemple, on peut décider d'enrichir le thesaurus de toutes les troncatures des quatre ou six premières lettres des mots du thesaurus initial.

Ainsi chaque mot serait représenté, dans notre exemple, trois fois : une fois en tant que lui-même, une fois tronqué à six caractères et une dernière fois tronqué à quatre caractères.

Tout mot de six caractères, disons aaaamm, apparaîtra à chaque fois que la ligne initiale contenait un mot aaaammxx. En d'autres termes, l'ensemble des lignes auxquelles apparaîtra le mot aaaamm est la réunion des ensembles d'indices de lignes où apparait un mot de la forme aaaammxx (c'est-à-dire aaaamm suivi de quoi que ce soit).

De même un mot de quatre caractères aaaa apparaîtra à chaque fois qu'un mot de la forme aaaaxxyy était présent dans la table initiale. Son arbre à radicaux est donc l'union des arbres à radicaux des mots dont il est préfixe.

L'intérêt est qu'une clause "entre'' (*between* en anglais) peut se traiter avec une économie importante en termes de lectures sur procédé de stockage. Par exemple, si on cherche l'ensemble des lignes auxquelles apparaît une date comprise dans l'intervalle [19931117, 19950225], le nombre de lectures nécessaires d'arbres à radicaux est de 14+1+1+1+25 = 42 (car [19931117, 19950225] = [19931117, 19931130] U [199312, 199312] U [1994, 1994] U [199501, 199501] U [10050201, 19950225]), au lieu de 466.

Il peut parfois se trouver que certaines lignes d'une table ne soient pas renseignées. Mais pour créer les arbres à radicaux, toute ligne devrait avoir une valeur.
On choisit donc des valeurs signifiant que la ligne correspondante ne contient pas d'information. Naturellement, on choisira une valeur ayant un rapport avec le type des données stockées; à titre d'exemple, on peut choisir :
#Empty# pour une chaîne de caractères, -2³¹ pour un entier signé sur 32 bits, 2³²-1 pour un entier
   non signé sur 32 bits,
   -2⁶³ pour un entier signé sur 64 bits,
   2⁶⁴-1 pour un entier non signé sur 64 bits, etc...

Cependant, le stockage d'une colonne par thesaurus et arbres à radicaux n'est pas très pratique pour répondre à une requête comme "Quelle est la valeur de la ligne 17 ?'', par exemple.

C'est pourquoi il est nécessaire de stocker en sus la colonne dans son ordre naturel. Bien sûr, plutôt que de stocker la colonne elle-même, il sera souvent avantageux de stocker la suite des indices de mots dans le thesaurus. Nous nommons ce stockage supplémentaire l'image non inversée de la colonne.

Par exemple, la colonne précédente sera stockée de la façon suivante :

**Thesaurus**

| | |
|---|---|
| 0 | Female |
| 1 | Male |

et la colonne :

| |
|---|
| 0 |
| 1 |
| 1 |
| 0 |
| 1 |
| 0 |
| 0 |
| 1 |
| 1 |
| 0 |
| 0 |

Remarque : il peut se trouver qu'au fur et à mesure que la base de données est transformée, un mot apparaisse ou disparaisse du thesaurus (par exemple lorsqu'on retire ou ajoute des lignes à la table). On pourrait dès lors penser que la réécriture complète de la colonne est nécessaire. Ce n'est en fait pas le cas : plutôt que de stocker le thesaurus trié, on peut le stocker non trié et enregistrer à part une permutation permettant de retrouver l'ordre lexicographique des mots qui le composent. C'est pourquoi si un mot apparaît dans le thesaurus, la réécriture complète de la colonne n'est pas nécessaire. On réécrit dans ce cas la permutation permettant de retrouver l'ordre lexicographique des mots plutôt que le thesaurus lui-même.

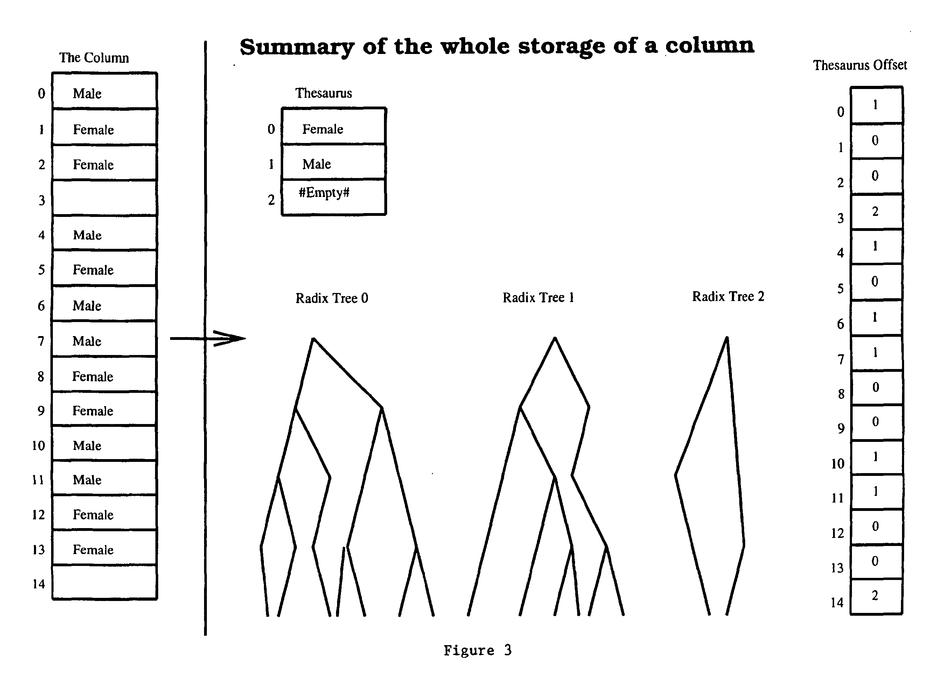

La figure 3 illustre le résumé du stockage complet d'une colonne.

Dans le cas d'une base de données ne contenant qu'une seule table elle-même constituée de plusieurs colonne peut être traitée comme si elle était formée de colonnes indépendantes. En d'autres termes, on peut créer le stockage de chacune des colonnes constituant la table.

La seule question en suspens est alors le traitement de la clé primaire.

Lorsqu'on s'occupe d'une clé primaire, on a besoin d'être capable de répondre le plus rapidement possible à deux types de requêtes opposées : "À quelle ligne peut-on trouver une valeur donnée de clé primaire " et "Quelle est la valeur de la clé primaire trouvée à une ligne donnée ?''.

On peut répondre efficacement à ces deux types d'interrogation en stockant à la fois la colonne ou les colonnes formant la clé primaire dans l'ordre dans lequel les lignes apparaissent dans la table et une permutation permettant de lire les colonnes dans l'ordre lié à une fonction quelconque de comparaison. On peut alors retrouver une valeur donnée par dichotomie.

Par exemple, imaginons qu'une clé primaire est formée de deux colonnes, dont les valeurs sont stockées dans le tableau ci-dessous.

| | | |
|---|---|---|
| (0) | 1 | 3 |
| (1) | 2 | 1 |
| (2) | 3 | 2 |
| (3) | 2 | 3 |
| (4) | 1 | 2 |
| (5) | 3 | 7 |
| (6) | 2 | 2 |
| (7) | 1 | 1 |
| (8) | 3 | 3 |
| (9) | 4 | 3 |

Dans cet exemple, les indices de lignes sont à nouveau exprimés explicitement mais mis entre parenthèses. On stocke donc les deux colonnes exactement comme elles sont dans la table et une permutation, liée à une fonction de comparaison qu'on choisit. Par exemple, on peut décider de comparer d'abord la première colonne lexicographiquement et à valeur égale comparer la deuxième ordinalement.

Dans ce cas, la clé primaire triée est :

| | | |
|---|---|---|
| (7) | 1 | 1 |
| (4) | 1 | 2 |
| (0) | 1 | 3 |
| (1) | 2 | 1 |
| (6) | 2 | 2 |
| (3) | 2 | 3 |
| (2) | 3 | 2 |
| (8) | 3 | 3 |
| (5) | 3 | 7 |
| (9) | 4 | 3 |

En retirant les valeurs (mais en gardant les indices), on obtient la permutation (7401632859).
La plus petite valeur se trouve donc à la ligne 7, la deuxième plus petite à la ligne 4 etc.
Retrouver une valeur donnée se fait ainsi facilement par dichotomie.

Lorsqu'on stocke une table, il est très pratique de stocker et maintenir à jour le nombre total de lignes dont elle est constituée.

Dans une base de données relationnelle, il y a habituellement plusieurs tables reliées entre elles par des jeux de clés primaires, clés étrangères.

Comme expliqué précédemment, une clé primaire est une colonne ou un ensemble ordonné de colonnes ne pouvant prendre la ou les mêmes valeurs en deux lignes distinctes. (L'indice de ligne est un exemple fondamental de clé primaire.)

Supposons qu'une table soit constituée de plusieurs millions de lignes, mais que certaines de ses colonnes ne puissent prendre qu'un nombre très réduit de valeurs différentes (par exemple, une base de données contenant des données de généalogie peut contenir les noms de personnes, pour chacune d'elles son pays de naissance, son continent de naissance, les pays et continents de naissance de sa mère et de son premier enfant s'il en a. Au lieu de renseigner toutes ces colonnes, il est considéré comme très économique de stocker dans un tel cas, les pays dans une table séparée de la table principale et le continents dans une troisième table. La table principale contient alors, à chaque ligne, une valeur (une clé étrangère) donnant un identifiant de ligne (une valeur de clé primaire) de la table "pays " ; et la table "pays " contient, à chacune de ses lignes, une valeur (une clé étrangère) identifiant une des lignes de la table " continent " (clé primaire).

Voici un exemple (table clients ci-dessous) miniature, illustrant ce qui précède :

| (li) | Cn | Inc | Bircoun | BirCont | MoCoun | MoCont | EldCoun | BldCont |
|---|---|---|---|---|---|---|---|---|
| (0) | Dupont | 817 | France | Europe | Tunisia | Africa | England | Europe |
| (1) | Gracamoto | 1080 | Japan | Asia | Japan | Asia | USA | America |
| (2) | Smith | 934 | England | Europe | India | Asia | England | Europe |
| (3) | Helmut | 980 | Germany | Europe | Germany | Europe | Germany | Europe |

(dans cet exemple, " cn " désigne le nom, " inc " le revenu, "Bircoun" le pays de naissance, "BirCont" le continent de naissance, " MoCoun " le pays de naissance de la mère, " MoCont " le continent de naissance de la mère, " EldCoun " le pays de naissance de l'aîné et " EldCont " le continent de naissance d'aîné.

Cette table peut être réécrite en plusieurs tables :

**Continents:**

| li) | Continent |
|---|---|
| 0) | Africa |
| 1) | America |
| 2) | Asia |
| 3) | Europe |

**Pays :**

| li) | Country | Continent |
|---|---|---|
| 0) | France | 3 |
| 1) | Tunisia | 0 |
| 2) | England | 3 |
| 3) | Japan | 2 |
| 4) | USA | 1 |
| 5) | India | 2 |
| 6) | Germany | 3 |

**La table principale devient ainsi :**

| (li) | en | Inc | Bircoun | MoCoun | EldCoun |
|---|---|---|---|---|---|
| (0) | Boyer | 817 | 0 | 1 | 2 |
| (1) | Gracamoto | 1080 | 3 | 3 | 4 |
| (2) | Smith | 934 | 2 | 5 | 2 |
| (3) | Belmut | 980 | 6 | 6 | 6 |

L'ensemble des trois tables ainsi construites occupe certes moins de place que la table initiale.

Mais cela illustre aussi l'idée selon laquelle une base relationnelle peut être transformée en un ensemble de tables indépendantes les unes des autres.

Dans l'exemple précédent, on peut considérer la table " Continents " par elle-même, la table " Pays " avec la table " continent " développée dedans (c'est-à-dire la table " pays " dans laquelle les références à la table ""continents'' ont été remplacées par les lignes de la table elle-même) et la table " Personnes " avec les tables " Pays " et " Continents " développées dedans.

Les tables d'expansion sont alors :

**Table d'expansion Continents :**

| (li) | Continent |
|---|---|
| (0) | Africa |
| (1) | America |
| (2) | Asia |
| (3) | Europe |

**La table d'expansion Pays devient :**

| li) | Country | Continent |
|---|---|---|
| 0) | France | Europe |
| 1) | Tunisia | Africa |
| 2) | England | Europe |
| 3) | Japan | Asia |
| 4) | USA | America |
| 5) | India | Asia |
| 6) | Germany | Europe |

**Table d'expansion Clients :**

| (li) | Cn | Inc | Bircoun | BirCont | MoCoun | MoCont | EldCoun | EldCont |
|---|---|---|---|---|---|---|---|---|
| (0) | Boyer | 817 | France | Europe | Tunisia | Africa | England | Europe |
| (1) | Gracamoto | 1080 | Japan | Asia | Japan | Asia | USA | America |
| (2) | Smith | 934 | England | Europe | India | Asia | England | Europe |
| (3) | Helmut | 980 | Germany | Europe | Germany | Europe | Germany | Europe |

Il peut bien évidemment arriver, comme dans cet exemple, qu'une table soit amenée à se développer plusieurs fois dans une autre. Cela implique qu'une colonne de table développée dans une autre devra toujours être référencée comme appartenant à la table d'expansion, développée dans la table d'expansion via un jeu de clés primaires et clés étrangères qu'ils ' feront partie de l'identité de la colonne.

Nous définissons donc une table d'expansion comme une table dans laquelle toutes les tables qui pouvaient être développées en elle l'ont été, en autant d'exemplaires qu'il y a de jeux de clés primaires clés étrangères permettant de passer de la table d'expansion à la table développée.
Une fois ce procédé d'expansion effectué, la base de données est formée de tables d'expansion indépendantes les unes des autres.

Pour chacune de ces tables d'expansion, on bâtit les indexes comme expliqué dans le cas d'une table seule.

Après l'étape d'expansion et celle d'indexation, l'invention ici décrite porte également sur une méthode de traitement de requêtes et de modification de la base de données ainsi structurée et indexée.

Dans cette partie, nous expliquons comment les indexes créés sont utilisés pour résoudre efficacement des requêtes SQL. Habituellement, une requête implique plusieurs tables et peut être séparée en deux parties distinctes : la clause "where" qui demande au gestionnaire de bases de données de calculer des indices de lignes d'une table et une partie demandant au gestionnaire de bases de données de faire des calculs sur des données se trouvant aux lignes calculées.

La première partie peut contenir des jointures de tables (un lien entre une clé étrangère et la clé primaire correspondante), une comparaison entre une colonne et une constante (avec un connecteur arithmétique comme =, >=, >, <, <=, Between, like, in...) ou une comparaison entre deux colonnes (mêmes opérateurs arithmétiques ou encore un produit cartésien). Ces requêtes sont connectées entre elles, lorsqu'il y en a plusieurs, par des connecteurs logiques (and, or, not...).

La deuxième partie de la requête peut contenir des opérations arithmétiques comme des sommes, des moyennes, des produits, l'opérateur de dénombrement * etc...

Comme expliqué précédemment, chacune des tables est considérée comme table d'expansion, ce qui signifie que les jointures de tables ne sont pas pertinentes pour une telle table.

Mais une requête comporte habituellement plusieurs tables. Se pose donc le problème du choix de la table d'expansion dans laquelle résoudre la requête, ce que le procédé résout comme suit.

Les tables impliquées dans la requête sont toutes développées dans un ensemble non vide, disons T.
Une seule de ces tables d'expansion n'est pas développée dans les autres. Cette table est la table dans laquelle nous devons résoudre la requête.

La clause "where" contient donc des clauses de jointures, reliées logiquement au reste de la requête par des connections logiques " et " . Il suffit donc de tout simplement les effacer en remplaçant toute la clause " et " par l'autre terme. cela signifie qu'on remplace " (Jointure ET Reste)" par " Reste " et ce pour chaque clause de jointure.

Voyons à présent comment l'invention gère efficacement une clause " where " débarrassée de ses clauses de jointure.

Nous appelons " requête atomique " une portion indivisible de la clause where, c'est-à-dire une comparaison qui forme toute la requête ou qui est reliée au reste de la requête par des connecteurs logiques sans qu'elle en comporte elle-même. Si une table t comporte la colonne c, une requête atomique sera par exemple t.c = 3, t.c between "HIGH'' and " MEDIUM " , ou encore t.c like Word%.

Les prochains sous-paragraphes expliquent comment l'invention gère les requêtes atomiques.

Le cas le plus simple à traiter est celui où il y a égalité entre une colonne et une valeur donnée. On lit l'arbre à radicaux de la valeur recherchée pour la colonne de la requête.

La clause « Between » est un exemple fondamental de requête atomique. Toutes les autres requêtes atomiques peuvent se ramener à ce cas. C'est pour cette clause que les macro-mots ont été créés.

Reprenons l'exemple des dates donné dans le paragraphe sur les macro mots. Cette colonne a été gérée en enrichissant le vocabulaire des troncatures de ses mots de longueur 4 et de longueur 6. Si on cherche les lignes dont la valeur est comprise entre [19931117, 19950225], on découpe l'intervalle en : [19931117, 19950225] = [19931117, 19931130] U [199312, 199312] U [1994, 1994] U [199501, 199501]U [10050201, 19950225].

Le calcul est alors très simple : on lit l'arbre à radicaux de la valeur 19931117, qu'on unit (opération logique "or") avec celui de la valeur 19931118, ... qu'on unit avec celui de la valeur 19931130 puis avec celui de la valeur (tronquée à 6 caractères) de 199312 puis avec celui (tronqué à 4 caractères) de 1994 puis avec celui (tronqué à 6 caractères) de 199501, puis avec celui de 19950201 puis avec celui de ... 19950225.

Ainsi est-on amené à lire 42 arbres à radicaux au lieu des 466 qu'il aurait fallu lire sans les macro mots.

Le traitement des " or " est expliqué plus bas.

On peut bien sûr traiter des intervalles semi ouverts ou ouverts en excluant simplement les mots correspondants.

Chacune des requêtes atomiques « Supérieur ou égal, inférieur ou égal, supérieur, inférieur » est une clause between qui s'ignore. En effet, si on appelle m et M le minimum et maximum du thesaurus de la colonne concernée, alors on peut traiter ces clauses comme une clause between.

| | | |
|---|---|---|
| t.c > a | Signifie t.c est dans | ]a,M] |
| t.c >= a | Signifie t.c est dans | [a,M] |
| t.c < a | Signifie t.c est dans | [m,a[ |
| t.c <= a | Signifie t.c est dans | [m,a] |

La clause In est une façon de mixer des égalités par des " or " . On les gère très simplement.

Par exemple, t.c in (a,b,c) se réécrit en t.c = a or t.c = b or t.c = c. La gestion des clauses " or " est expliquée plus bas.

La clause " like " est un autre exemple de clause between. Par exemple, la clause t.c like Mot% se réécrit en effet en t.c between [Mot, Mou[.

Les requêtes atomiques peuvent être mixées à l'aide de connecteurs logiques : le " And " , le "Or" et le "Not " . Les trois prochaines sous-sections sont dédiées à ces opérateurs.

Nous souhaitons d'abord insister sur le fait qu'une requête atomique renvoie toujours en arbre à radicaux, ce qui sera aussi le cas de ces opérateurs logiques et pour finir de la clause where.

Le fait de faire un " or " ("ou") de deux arbres à radicaux est en fait l'opération consistant à les réunir.
Ce calcul se fait très aisément par un parcours en largeur des deux arbres simultanément.

Il se fait récursivement par
**union** (t1, t2)
Debut
Arbre res;
Si (t1 = NULL) res = t2
Si (t2 = NULL) res = t1
res->FilsGauche = Union(t1->FilsGauche, t2->FilsGauche)
res->FilsDroit = Union(t1->FilsDroit, t2->FilsDroit)
Renvoyer res
Fin

La clause « and » se calcule presque comme la précédente (elle correspond à une intersection) :
**Intersection** (t1, t2)
Debut
Arbre res;
Si (t1 = NULL) res = NULL
Si (t2 = NULL) res = NULL
res->FilsGauche = Intersection (t1->FilsGauche, t2->FilsGauche)
res->FilsDroit = Intersection (t1->FilsDroit, t2->FilsDroit)
renvoyer res
Fin
Cette clause demande néanmoins moins de temps de calcul en moyenne que la précédente. En effet, lors des deux parcours des arbres en parallèle il suffit qu'un des deux noeuds explorés n'ait pas de fils gauche pour que l'exploration du fils gauche de l'autre noeud soit inutile.

Cela est particulièrement vrai quand les arbres ont été stockés sur disque dur dans des fichiers séparés.

La clause « Not » est une des plus difficiles à mettre en oeuvre parmi les requêtes atomiques.

L'indice maximal des lignes de chacune des tables est stocké et mis à jour. La clause Not est alors traitée comme suit (le but est de calculer l'arbre à radicaux Not T avec T un arbre à radicaux).

On définit ici un *n*-arbre à radicaux complet un arbre à radicaux contenant toutes les valeurs de entiers compris entre 0 et *n*-1.

Pour calculer un " not " , on retire alors récursivement, à l'aide d'un *x-or* les feilles de *T* d'un n arbre à radicaux (où n désigne l'indice maximal des lignes de la table d'expansion à laquelle appartient T).

Lorsqu'on retire un noeud d'un arbre à radicaux, on le retire et on retire récursivement son père s'il n'a plus de fils.

Par exemple, la figure 3 montre le calcul de *Not T* lorsque la table d'expansion à laquelle *T* appartient à un indice maximum de lignes utilisé égal à 13.

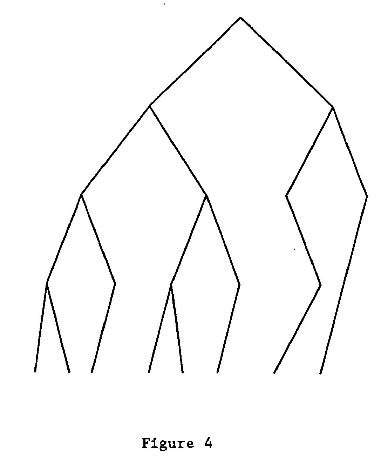

L'arbre initial est présenté figure 3 et l'arbre transformé est présenté figure 4.

La comparaison entre deux colonnes est la plus complexe des requêtes atomiques. Cette requête se traite pratiquement comme un produit cartésien (voir la section suivante).

Considérons une table d'expansion t et deux de ses colonnes *t.c* et *t.d*. Une comparaison entre ces deux colonnes est une opération au cours de laquelle on souhaite discriminer les lignes de t pour lesquelles *t.c* > *t.d* par exemple. Nous insistons sur le fait que cette comparaison se fait à indice de ligne identique pour les deux colonnes, ce qui distingue cette comparaison du produit cartésien.

Comment effectuons-nous cette requête ?
Nommons *T*_{c} et *T*_{d} les thesaurus des deux colonnes *t.c* et *t.d*.

Nous recherchons les lignes telles qu'à ces lignes, *t.c* > *t.d*. Voici comment procéder. Pour tout mot *w* du thesaurus *T*_{c}, on calcule l'arbre à radicaux *r* de l'intervalle [*m*_*d*, *w*'] où *w*' désigne le plus grand mot de *T*_{d} inférieur strictement à *w*. Alors en calculant un " et " sur *r* et l'arbre à radicaux de *w*, on obtient un arbre *t*_{w}.

En effectuant la réunion de tous les arbres à radicaux *r*_{w}, on obtient l'arbre à radicaux recherché.

Il est bien évident que les arbres *t*_{w} ne doivent pas être calculés indépendamment les uns des autres. Puisque les mots *w* sont parcourus dans l'ordre croissant, il suffit d'unir *t*_{w} à l'arbre correspondant à l'ajout des mots compris entre *w* et le mot suivant dans *T*_{c}.

On peut aussi calculer *t*_{c-} *t*_{d} à l'aide des fichiers à plat et lire le résultat.

Les autres clauses semblables se résolvent de façon similaire (par exemple *t.c* >= *t*_{d}).

Examinons le traitement des sous-requêtes.
En effet, il peut se trouver qu'une clause "where" contienne elle-même une autre clause "where", qui peut ou non être corrélée à la clause "where" principale.

Qu'est ce qu'une sous-requête corrélée ? Un exemple d'une telle requête est donné par la requête 17 du TPC. Cette requête est :

```
           select
           sum(l_extendedprice) / 7.0 as avg_yearly
           from
            lineitem
            part
           where
            p_partkey = l_partkey
            and p_brand = ' [BRAND]'
            and p_container = '[CONTAINER]'
            and l_quantity < (
              select
              0.2 * avg(l_quantity)
             from
              lineitem
             where
              p_partkey = p_partkey
```

Dans cette requête, on doit réaliser le calcul d'une sous-requête tenant compte des conditions requises par la requête principale (puisque le p_partkey de la sous-requête appartient à la clause where principale).

Donc ce genre de requête peut être réécrite de façon à changer cette sous-requête en une sous-requête non corrélée. Il suffit pour cela de dupliquer les conditions requises par la clause where principale dans la clause where de la sous-requête corrélée. Dans notre exemple, cela donne :

```
           select
              sum(l_extendedprice)/ 7.0 as ag_yearly
           from
             lineitem
             part
           where
             p_partkey = l_partkey
             and p_brand = '[BRAND]'
             and p_container = '[CONTAINER]'
             and l_quantity < (
               select
                0.2 * avg(l_quantity)
               from
                lineitem
                partsupp
              where
                p_part<key = p_partkey
                and p_brand = '[BRAND]'
                and p_container = '[CONTAINER]'
             );
           }
```

Finalement, une sous-requête corrélée peut se réécrire en une sous-requête non corrélée.

On traite une requête SQL contenant des sous-requêtes non corrélées en traitant d'abord les sous-requêtes récursivement et en remplaçant dans la requête chaque sous-requête par son résultat.

Ainsi, nous traitons une clause "where" qui nous renvoie un arbre à radicaux représentant les indices de lignes de la table d'expansion correspondant à cette clause.

Supposons à présent que l'objet de la requête soit de réaliser certains calculs sur quelques colonnes aux lignes trouvées. Par exemple on peut vouloir calculer la moyenne aux lignes trouvées des valeurs d'une certaine colonne.

Les valeurs de cette colonne sont stockées "à plat " dans leur ordre d'apparition. Il est donc très simple de relire les valeurs de cette colonne uniquement pour les lignes trouvées précédemment et effectuer sur ces valeurs les calculs demandés.

L'invention est décrite dans ce qui précède à titre d'exemple. Il est entendu que l'homme du métier est à même de réaliser différentes variantes de l'invention sans pour autant sortir du cadre du brevet.

## Revendications

1. Procédé pour l'accélération de l'interrogation d'une base de données, d'organisation d'une base de données relationnelle et pour la réduction de l'espace de stockage requis, destiné à être mis en oeuvre sur une architecture informatique comprenant au moins un processeur et de la mémoire, comportant les étapes consistant à :
- enregistrer, pour chacune des tables de la base de données relationnelle, une table d'expansion hiérarchique constituée par une table dans laquelle toutes les tables qui pouvaient être développées en elle l'ont été,
- calculer les index pour cette table d'expansion, en mettant en oeuvre les étapes suivantes :
- créer un thesaurus de chacune des colonnes de ladite table d'expansion hiérarchique ;
- pour chacun des mots de chacun des thesaurus, créer l'arbre des radicaux de l'ensemble des indices de lignes sur lesquelles ledit mot apparaît;
**caractérisé en ce que** chaque arbre de chacun des mots est un arbre à radicaux et **en ce que** le procédé comporte, lors de la réception d'une requête d'interrogation :
- une première étape de détermination de la table d'expansion ;
- une deuxième étape de résolution de la clause « Where » de la requête en interrogeant les colonnes de ladite table d'expansion, cette résolution de la clause where s'effectuant en résolvant les comparaisons entre colonnes par lecture des arbres à radicaux des mots correspondants, puis en faisant sur les arbres à radicaux susdits les opérations d'intersection, de réunion ou de complémentation correspondant aux opérations logiques (and, or, not) de la clause where;

2. procédé d'organisation d'une base de données selon la revendication 1, **caractérisé en ce qu'**il comporte en outre une étape consistant en, pour chacune des clés primaires, stocker la suite de ses valeurs en mettant en oeuvre une permutation sur l'ensemble de ces valeurs dans le but de retrouver une donnée.

3. procédé d'organisation d'une base de données relationnelle selon la revendication 1, **caractérisé en ce qu'**il comporte en outre une étape d'interrogation des images non inversées des colonnes pour résoudre la clause « Select »..

4. Procédé d'organisation d'une base de données selon la revendication 1 ou 2 ou 3, **caractérisé en ce qu'**il comporte en outre une étape de découpage des tables de la base de données en un ensemble de sous-tables, chacune comportant un nombre donné de lignes à l'exception de la dernière sous-table.

5. Procédé d'organisation d'une base de données selon la revendication 1 ou 2 ou 3 ou 4, **caractérisé en ce que** la base de données met en oeuvre le langage SQL (Structured Query Language).

6. Système de base de données organisé selon le procédé d'organisation de la revendication 1, 2 ou 3 ou 4 ou 5.

## Claims

1. Process for the acceleration of interrogation of a data base, of organization of a relational database and for the reduction of the storage space required, intended to be implemented on a computer architecture comprising at least one processor and memory, including the steps consisting in:
- recording, for each of the tables of the relational database, a table of hierarchical expansion constituted by a table in which all tables which could be developed in it have been created,
- calculate the index for this table of expansion, by implementing the following steps:
- create a thesaurus of each of the columns of the said table of hierarchical expansion,
- for each of the words of each of the thesauri, create the radix tree of the set of the indices of lines on which the said word appears;
**characterized by** the fact that each tree of each of the words is a radix tree and that the process includes, at the reception of a query request:
- a first step of determining the expansion table;
- a second step of resolution of the "Where" clause of the query by scanning the columns of the said expansion table, this resolution of the where clause is carried out by solving the comparisons between columns while reading the radix trees of corresponding words, then by performing on the aforesaid radix trees the intersection, meeting or complementation operations corresponding to the logical operations (and, or, not) of the where clause;

2. Process of organization of a database according to claim 1, **characterized by** the fact that it also includes a step consisting, for each of primary keys, in storing the result of its values by implementing a permutation on the whole set of these values in order to retrieve some data.

3. Process of organization of a relational database according to claim 1, **characterized by** the fact that it also includes a stage of interrogation of the non reversed columns to resolve the clause "Select".

4. Process of organization of a database according to claim 1 or 2 or 3, **characterized by** the fact that it also includes a step of splitting the tables in the database in a set of sub-tables, each with a given number of rows excepted the last sub-table.

5. Process of organization of a database according to claim 1 or 2 or 3 or 4, **characterized by** the fact that the database implements the SQL (Structured Query Language).

6. Data base system organized according to the organization process of the claim 1, 2 or 3 or 4 or 5.

## Patentansprüche

1. Verfahren zur Beschleuningung des Abfragens einer Datenbank, zur Organisation einer relationalen Datenbank und zur Reduzierung des nötigen Speicherraums, dessen Zweck auf eine mindestens einen Prozessor und Arbeitsspeicher enthaltende informatische Architektur eingesetzt zu werden ist, das die Stufen umfaßt, die in das Folgende bestehen:
- für jede Tabelle der relationalen Datenbank eine hierarchische Expansionstabelle zu erstellen, welche in eine Tabelle besteht, in der alle Tabellen entwickelt worden sind, die in ihr entwickelt werden konnten,
- die Indexe dieser Expansionstabelle zu rechnen, wobei folgende Stufen eingesetzt werden:
- einen Thesaurus jeder Spalte besagter hierarchischen Expansionstabelle zu erstellen;
- für jedes Wort jedes Thesaurus das Radikalbaum der Menge der Indexe der Reihen zu erstellen, wo sich besagtes Wort befindet;
damit **gekennzeichnet**, daß jeder Baum jedes Worts ein Radikalbaum ist, und daß das Verfahren beim Empfang eines Abfrageantrags folgendes umfaßt:
- eine erste Stufe, die die Expansionstabelle bestimmt;
- eine zweite Stufe des durch Abfragen der Spalten besagter Expansionstabelle erfolgenden Lösens der Where-Klausel, welches durchgeführt wird, indem die Vergleiche zwischen Spalten durch Ablesen der Radikalbäume der entsprechenden Wörter gelöst werden und die Operationen des Durchschnitts, der Vereiningung oder des Komplements, die den logischen Operationen (and, or, not) der Where-Klausel entsprechen, dann gelöst werden.

2. Organisationsverfahren einer Datenbank nach dem Anspruch 1 mit dem Kennzeichen, daß es außerdem eine Stufe umfaßt, die darin besteht, daß für jeden Fremdschlüssel die Reihenfolge ihrer Werte gespeichert wird, was durch eine permutation der Menge dieser Werte erfolgt, deren Zweck ist, eine Eingabe zu finden.

3. Organisationsverfahren einer relationalen Datenbank nach dem Anspruch 1, mit dem Kennzeichen, daß es auJ3erdem eine Stufe des Abfragens der uninvertierten Bilder der Spalten umfaßt, um die Select-Klausel zu lesen.

4. Organisationsverfahren einer Datenbank nach dem Anspruch 1 oder 2 oder 3, mit dem Kennzeichen, daß es außerdem eine Stufe des Aufschneidens der Tabellen der Datenbank in eine Menge von Untertabellen, wobei jede mit der Ausnahme der letzten eine gegebene Anzahl von Reihen enthält.

5. Organisationsverfahren einer Datenbank nach dem Anspruch 1 oder 2 oder 3 oder 4 mit dem Kennzeichen, daß es außerdem die SQL Sprache einsetzt.

6. Datenbankmanagementsystem, das nach den Ansprüchen 1, 2, 3, 4 oder 5 organisiert ist.
